# EUROPÄISCHE PATENTSCHRIFT

(11) **EP 0 802 022 B1**
(45) Veröffentlichungstag und Bekanntmachung des Hinweises auf die Patenterteilung: **09.06.1999**
(21) Anmeldenummer: 97103816.1
(22) Anmeldetag: 07.03.1997
(51) Int. Cl.: B25B 1/10

(54) **Spannvorrichtung mit mechanischem Kraftverstärker**
Clamping device with a mechanical power booster
Dispositif de serrage avec renforcement mécanique d'effort

(30) Priorität: 18.04.1996 DE 19615335
(43) Veröffentlichungstag der Anmeldung: 22.10.1997
(73) Patentinhaber: Gressel AG, CH-8355 Aadorf (CH)
(72) Erfinder: Berchtold, Heinrich, 8606 Nänikon / Uster (CH)
(74) Vertreter: Liebau, Gerhard, Dipl.-Ing.

(56) Entgegenhaltungen:
- EP-A- 0 136 991
- CH-A- 258 940
- DE-A- 3 329 295
- DE-A- 4 127 772
- DE-B- 1 283 168
- US-A- 5 399 129

## Beschreibung

Die Erfindung betrifft eine Spannvorrichtung mit mechanischem Kraftverstärker, mit einer Gewindespindel, die insbesondere auf einem beweglichen Spannschieber eines Maschinenschraubstockes oder dgl. einwirkt und in einer stationären Mutter desselben verschraubbar ist, mit einem den Kraftverstärker umschließenden, koaxial zur Gewindespindel angeordneten und mit dieser drehfest verbundenen, im wesentlichen zylindrischen Gehäuse, mit einem in dem Gehäuse axial verschiebbaren und drehfest mit diesem verbundenen, ersten Spannglied, dessen eines Ende auf ein am Spannschieber anliegendes Druckelement einwirkt, mit einem in dem Gehäuse begrenzt drehbar angeordneten, zweiten Spannglied, mit mehreren zwischen den Spanngliedern angeordneten Spannbolzen, die in einer Endlage (Entspannstellung) des zweiten Spanngliedes in spitzem Winkel zu einer durch die Gehäuseachse verlaufenden Ebene geneigt und in der anderen Endlage (Spannstellung) des zweiten Spanngliedes annähernd parallel zu dieser Ebene angeordnet sind, mit einer beide Spannglieder aufeinander zu bewegenden Federanordnung, mit einem das zweite Spannglied gegenüber dem Gehäuse axial abstützenden Axiallager und mit einer auf das zweite Spannglied einwirkenden, koaxial zum Gehäuse angeordneten Antriebswelle.

Bei einer derartigen bekannten Spannvorrichtung (DE-AS 1 283 168) ist das zweite Spannglied unmittelbar mit der Antriebswelle verbunden. An der Antriebswelle kann eine Handkurbel angesetzt werden. Die Schraubspindel ist als Hohlspindel ausgeführt, in welcher eine Druckstange verschiebbar ist, die das Druckelement bildet.

Die Druckstange liegt einerseits am ersten Spannglied und andererseits am Spannschieber in der Nähe von dessen Spannbacken an. Dieser verschiebbare Spannbacken bildet einen Teil eines Maschinenschraubstockes. Vor dem Spannen eines Werkstückes befinden sich die beiden Spannglieder in Entspannstellung, wobei die Spannbolzen in spitzem Winkel zu einer durch die Gehäuseachse verlaufenden Ebene geneigt sind. Durch kräftige Tellerfedern, die auf das erste Spannglied einwirken, werden sie in dieser schrägen Stellung gehalten. Infolge der Federkraft kann sich zunächst beim Drehen der Handkurbel das zweite Spannglied nicht gegenüber dem ersten Spannglied verdrehen. Dies hat zur Folge, daß beim Drehen der Handkurbel über das drehfest mit dem Gehäuse verbundene erste Spannglied auch die Schraubspindel gedreht und dadurch der bewegliche Spannschieber dem Werkstück genähert wird bis sein Spannbacken mit geringer Kraft am Werkstück anliegt. Diese erste Bewegung des Spannschiebers, die allein durch Verdrehen der Schraubspindel in der stationären Mutter erfolgt, bezeichnet man als Zustellhub. Durch die Anlage des Spannbackens am Werkstück bleibt die Schraubspindel am Ende des Zustellhubes stehen. Bei weiterer Verdrehung der Handkurbel wird nunmehr die Antriebswelle und damit auch das fest mit ihr verbundene zweite Spannglied gegenüber dem ersten Spannglied verdreht. Hierdurch werden die Spannbolzen aus ihrer schräg zur Gehäuseachse verlaufenden Stellung aufgerichtet, d.h. in eine parallel oder annähernd parallel zur Gehäuseachse verlaufende Spannstellung gebracht. Dies hat zur Folge, daß das erste Spannglied vom zweiten Spannglied axial um einen Betrag weggedrückt wird, der kleiner ist als 1 mm. Das erste Spannglied verschiebt die Druckstange und diese wiederum den Spannschieber. Dank der mittels der Spannbolzen erzielten hohen Übersetzung wird ein erheblicher Spanndruck auf den Spannschieber ausgeübt. Dieses durch axiales Verschieben des ersten Spanngliedes bzw. der Druckstange bewirkte Verschieben des Spannschiebers unter hohem Druck bezeichnet man als Spannhub. Zum Aufrichten der Spannbolzen aus ihrer schrägen Entspannstellung in ihre Spannstellung ist jedoch nur eine Verdrehung der beiden Spannglieder in einem verhältnismäßig kleinen Winkelbereich von etwa 60° möglich. Da in diesem kleinen Winkelbereich die Spannkraft stark ansteigt, ist ein entsprechend großes Drehmoment nötig, um mittels der Antriebswelle die beiden Spannglieder gegeneinander mittels der Handkurbel zu verdrehen. Bei größeren Maschinenschraubstöcken und Spannvorrichtungen mit einer Spannkraft von 40 kN und mehr ist zum Drehen der Handkurbel eine sehr große Handkraft und/oder eine Handkurbel mit einem sehr langen Hebelarm erforderlich. Beides ist jedoch unerwünscht. Ein erhöhtes Drehmoment ist deshalb nötig, weil beim Spannhub auch die Kraft der Tellerfedern überwunden werden muß. Bei der bekannten Spannvorrichtung müssen die Tellerfedern sehr kräftig ausgelegt sein, weil sonst die Spannvorrichtung bereits bei sehr kleiner Spannkraft vom Zustellhub auf den Spannhub umschaltet, so daß dann wegen dem verhältnismäßig kleinen Spannhub nicht mehr eine ausreichende Spannkraft erzielbar ist. Große und kräftige Tellerfedern erfordern außerdem in axialer Richtung zusätzliche Baulänge.

Der Erfindung liegt daher die Aufgabe zugrunde, eine Spannvorrichtung mit Kraftverstärker der eingangs erwähnten Art zu schaffen, bei dem das zur Drehung der Handkurbel erforderliche Drehmoment auch beim Spannhub möglichst klein ist, um eine einfache und bequeme Handbetätigung zu ermöglichen.

Dies wird nach der Erfindung dadurch erreicht, daß zwischen dem zweiten Spannglied und der Antriebswelle ein Planetengetriebe vorgesehen ist, dessen Sonnenrad an der Antriebswelle angeordnet, dessen Hohlrad mit dem Gehäuse verbunden und dessen Steg durch das zweite Spannglied gebildet ist, wobei Lagerzapfen der Planetenräder in die den Spannbolzen abgekehrte Rückseite des zweiten Spanngliedes eingreifen, und daß zwischen dem Gehäuse und dem zweiten Spannglied eine federbelastete Rastkupplung vorgesehen ist.

Die Erfindung geht also von dem Gedanken aus, zwischen dem zweiten Spannglied und der Antriebswelle ein Planetengetriebe anzuordnen, um durch das Untersetzungsverhältnis dieses Planetengetriebes die an der Handkurbel aufzuwendende Handkraft zu verringern. Ein solches Planetenradgetriebe mit einem Untersetzungsverhältnis von 4 - 5 : 1 erfordert in axialer Richtung des Gehäuses nur einen sehr geringen Platzbedarf von etwa 10 mm. Dieser Platzbedarf kann noch dadurch ausgeglichen werden, daß bei der erfindungsgemäßen Spannvorrichtung die Federanordnung, welche die Spannglieder aufeinander zu bewegt, wesentlich kleiner ausgebildet sein kann und daher auch an anderer Stelle untergebracht werden kann als bei der bekannten Spannvorrichtung. Das Planetengetriebe erfordert bei der erfindungsgemäßen Spannvorrichtung auch wenig Platz, weil der Steg des Planetengetriebes durch das zweite Spannglied gebildet ist und dieses somit eine mehrfache Funktion aufweist. Durch das Untersetzungsverhältnis des Planetenradgetriebes ist die an der Handkurbel aufzuwendende Handkraft wesentlich verringert worden. Das Untersetzungsverhältnis des Planetenradgetriebes könnte aber dazu führen, daß die Spannvorrichtung zu früh vom Zustellhub auf den Spannhub umschaltet, wenn der Spannschieber noch nicht mit einer ausreichenden Spannung am Werkstück anliegt. Deshalb weist die erfindungsgemäße Spannvorrichtung zwischen dem Gehäuse und dem zweiten Spannglied die federbelastete Rastkupplung auf. Durch diese Rastkupplung ist während des Zustellhubes das zweite Spannglied und damit der Steg des Planetengetriebes mit dem Gehäuse gekuppelt, so daß sich bei Drehung der Handkurbel die Antriebswelle zusammen mit dem Gehäuse und der Schraubspindel dreht. Hierdurch wird der Spannschieber in einem Zustellhub gegen das Werkstück bewegt und mit vorbestimmter Vorspannkraft an das Werkstück angedrückt. Erst bei Überschreiten eines durch die Rastkupplung bestimmten Drehmomentes wird eine Verdrehung des zweiten Spanngliedes gegenüber dem ersten Spannglied möglich und erst dann wird das Planetengetriebe freigegeben und der Spannhub eingeleitet. Während dieses Spannhubes kann die Handkurbel mit einer verhälnismäßig geringen Kraft um eine Umdrehung oder mehr weitergedreht werden.

Vorteilhafte Ausgestaltungen der Erfindung sind in den Unteransprüchen gekennzeichnet.

Die Erfindung ist in folgendem, anhand eines in der Zeichnung dargestellten Ausführungsbeispieles näher erläutert. Es zeigen:
- Figur 1: einen Längsschnitt eines Maschinenschraubstockes mit der darin eingesetzten Spannvorrichtung,
- Figur 2: einen Axialschnitt der Spannvorrichtung,
- Figur 3: einen Querschnitt derselben nach der Linie III-III der Figur 2.

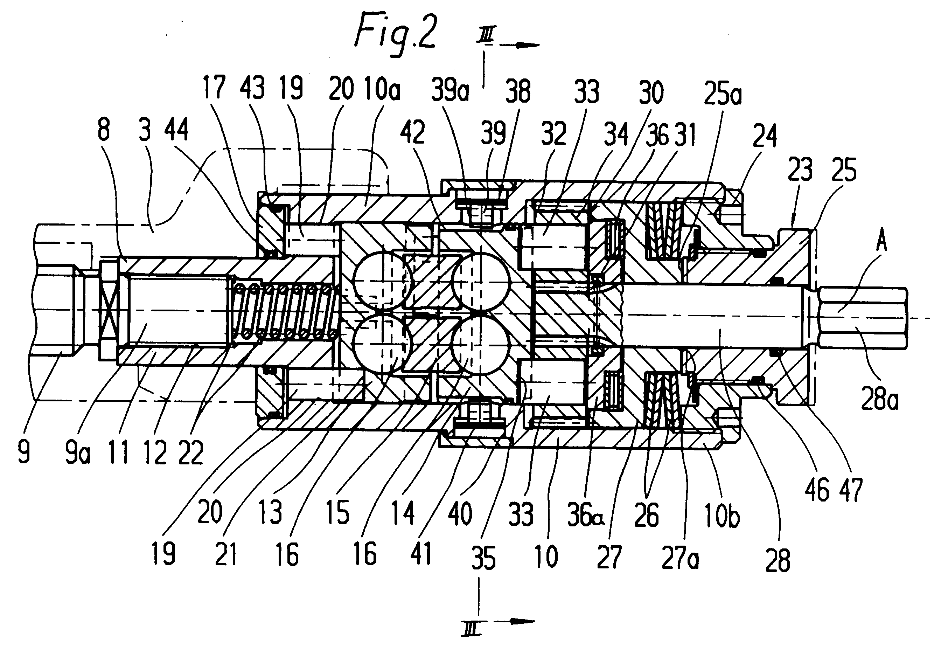

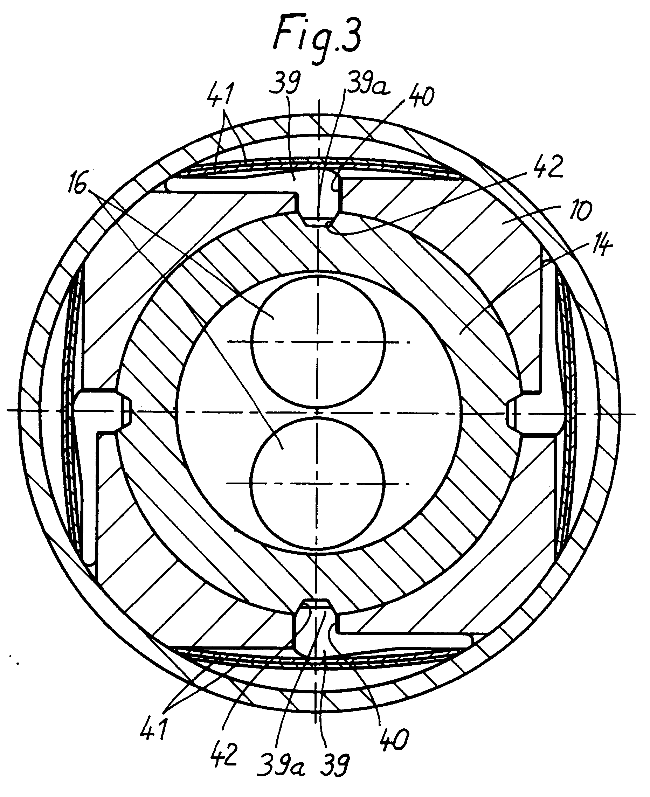

Der in der Zeichnung dargestellte Maschinenschraubstock weist eine Grundplatte 1 mit einer festen Spannbacke 2 auf. An dem Grundkörper 1 ist ein Spannschieber 3 in Richtung S verschiebbar gelagert, der die bewegliche Spannbacke 4 trägt. In dem Grundkörper 1 ist außerdem eine Mutter 5 angeordnet, die über einen Querbolzen 6 gegenüber dem Grundkörper an verschiedenen Stellen festlegbar ist. Deshalb ist die Mutter 5 als stationäre Mutter bezeichnet. Die Spannvorrichtung 7 ist in einer Längsbohrung 8 des Spannschiebers 3 drehbar gelagert. Ihr konstruktiver Aufbau ist in den Figuren 2 und 3 näher dargestellt.

Die Spannvorrichtung 7 weist eine Gewindespindel 9 auf, die in der stationären Mutter 5 des Maschinenschraubstockes verschraubbar ist. Koaxial zur Gewindespindel 9 ist ein im wesentlichen zylindrisches Gehäuse 10 vorgesehen, dieses Gehäuse 10 umschließt einen weiter unten noch näher beschriebenen Kraftverstärker und weist an seinem der Schraubspindel zugekehrten vorderen Ende einen koaxialen zylindrischen, hohlen Ansatz 11 auf. Der Durchmesser dieses Ansatzes 11 ist kleiner als der des Gehäuses 10. Mit diesem Ansatz 11 ist das Gehäuse 10 in der Längsbohrung 8 des Spannschiebers 3 drehbar gelagert. Die Gewindespindel 9 weist an ihrem einen Ende 9a ein feineres Gewinde 12 auf, mit dem sie fest in den Ansatz 11 eingeschraubt ist. Hierdurch ist die Gewindespindel 9 drehfest mit dem Gehäuse 10 verbunden.

Der vom Gehäuse 10 umschlossene Kraftverstärker besteht im wesentlichen aus einem ersten Spannglied 13, einem zweiten Spannglied 14, zwei zwischen diesen angeordneten Spannbolzen 15 und vier Kugeln 16. Die Spannbolzen 15 weisen an ihren beiden Enden je eine Kugelpfanne auf, in welche die Kugel 16 eingreift. Die beiden Spannglieder 13 und 14 sind mit halbkugelförmigen Vertiefungen versehen, in welche die Kugeln 16 eingreifen. Gegebenenfalls können die Spannbolzen 15 an ihren Enden auch halbkugelförmig ausgestaltet sein, wobei dann die Kugeln 16 entfallen.

In Figur 2 ist die Spannvorrichtung in ihrer Ausgangsstellung, d.h. in Entspannstellung, dargestellt. Hierbei ist das zweite Spannglied 14 um etwa 52° gegenüber dem ersten Spannglied 13 verdreht. Die Spannbolzen 15 sind infolgedessen verschränkt oder in spitzem Winkel zur Gehäuseachse A geneigt angeordnet. Lediglich der Übersichtlichkeit halber sind in Figur 2 die Spannbolzen 15 in einer zur Gehäuseachse A parallelen Lage dargestellt, die sie in Spannstellung einnehmen.

Das erste Spannglied 13 ist im Gehäuse 10 axial verschiebbar, jedoch gegenüber dem Gehäuse 10 drehfest gelagert. Im vorderen, der Schraubspindel 9 zugekehrten Ende 10a des Gehäuses 10 ist ein Druckring 17 axial verschiebbar. Dieser Druckring 17 liegt einerseits an einer Ringfläche 18 des Spannschiebers 3 und andererseits an mehreren Druckbolzen 19 an, die in axialen Bohrungen 20 des Gehäuses 10 verschiebbar sind. An diesen Druckbolzen 20 stützt sich das erste Spannglied 13 ab. Einer dieser Druckbolzen 20 kann etwa länger ausgebildet sein und in eine Ausnehmung 21 des Spanngliedes 13 eingreifen, wodurch letzteres gegenüber dem Gehäuse 10 drehfest ist. Es könnte jedoch auch ein separater Stift als Verdrehsicherung vorgesehen sein. Ferner ist in dem hohlen Ansatz 11 eine Druckfeder 22 angeordnet, die sich an dem Ende 9a der Schraubspindel 9 abstützt. Die Druckfeder 22 wirkt auf das erste Spannglied 13 und übt damit auf dieses einen in Richtung auf das zweite Spannglied 14 gerichteten Druck aus.

Das zweite Spannglied 14 ist in dem Gehäuse 10 begrenzt drehbar gelagert.

Am hinteren Ende 10b des Gehäuses ist eine im Prinzip bekannte Spannkrafteinstellvorrichtung 23 (vgl. z.B. DE 37 29 093 C1) angeordnet. Diese besteht aus einer in die Endplatte 24 des Gehäuses eingeschraubten Stellschraube 25, mehreren kräftigen Tellerfedern 26 und einer Widerlagerscheibe 27. Durch Verdrehung der Stellschraube 25 kann in Entspannstellung der Vorrichtung der Abstand zwischen dem vorderen Ende 25a der Stellschraube 25 und dem hinteren Ende 27a der Widerlagerscheibe 27 und damit die maximale Spannkraft der Spannvorrichtung eingestellt werden. Je größer der ursprüngliche Abstand ist, desto kleiner ist die erreichbare Spannkraft. Da in der gezeigten Stellung die beiden Flächen 25a und 27a aneinanderliegen, ist die Vorrichtung auf die maximale Spannkraft eingestellt.

In der Stellschraube 25 ist eine Antriebswelle 28 drehbar, an deren äußerem Ende 28a eine Handkurbel 29 ansetzbar ist. Zwischen dieser Antriebswelle 28 und dem zweiten Spannglied 14 ist ein Planetengetriebe 30 zwischengeschaltet. Das Sonnenrad 31 dieses Planetengetriebes wird durch eine entsprechende Verzahnung am vorderen Ende der Antriebswelle 28 gebildet. Das Hohlrad 32 ist mit dem Gehäuse 10 verbunden bzw. es bildet vorteilhaft einen Bestandteil des Gehäuses 10. Das zweite Spannglied 14 bildet den Steg des Planetengetriebes 30. Zu diesem Zweck sind mehrere Lagerzapfen 33, die zur drehbaren Lagerung der Planetenräder 34 dienen, in entsprechende Ausnehmungen 35 des zweiten Spanngliedes 14 eingesetzt. Die Lagerzapfen 33 stehen an den dem zweiten Spannglied 14 abgewandten Seiten der Planetenräder geringfügig vor und stützen sich an einer Druckscheibe 36a ab. Zwischen dieser Druckscheibe 36a und der Widerlagerscheibe 27 ist ein Axiallager 36 angeordnet.

Vervollständigt wird die Spannvorrichtung durch eine Rastkupplung 38, die zwischen dem Gehäuse 10 und dem zweiten Spannglied 14 wirksam ist. Diese Rastkupplung 38 weist mehrere in Umfangsrichtung des Gehäuses versetzt zueinander angeordnete Rastelemente 39 auf, die in radial verlaufenden Ausnehmungen 40 radial beweglich sind und durch die Kraft der Blattfedern 41 radial nach innen belastet sind. Die Rastelemente 39 greifen mit ihren inneren, prismaförmig ausgebildeten Enden 39a in entsprechende prismaförmige Nuten 42 am Umfang des zweiten Spanngliedes 14 ein. Anstelle derartiger Rastelemente 39 mit prismaförmigen Enden könnten die Rastelemente auch als Kugeln ausgebildet sein, die durch Schraubenfedern in entsprechende kegelstumpfförmige Vertiefungen am Umfang des zweiten Spanngliedes 14 eingreifen.

Um das Eindringen von Kühlschmiermittel, Spänen und sonstigen Verunreinigungen in das Gehäuse 10 zu verhindern, ist der Druckring 17 zweckmäßig durch O-Ringe 43, 44 gegenüber dem Gehäuse 10 und dem Ansatz 11 abgedichtet. Ebenso sind zweckmäßig auch die übrigen, gegenüber dem Gehäuse 10 beweglichen und aus diesem herausgeführten Teile, wie z.B. die Stellschraube 25 und die Antriebsspindel 28, durch O-Ringe 46, 47 abgedichtet. Hierdurch ist es auch möglich, das Gehäuse 10 vollständig mit Öl zu füllen. Dieses Öl wirkt nicht nur als Schmiermittel für alle im Gehäuse 10 befindlichen Teile, sondern das Öl verhindert auch das Eindringen von Kühlschmiermittel und Spänen in das Gehäuse.

Die Wirkungsweise ist folgende:

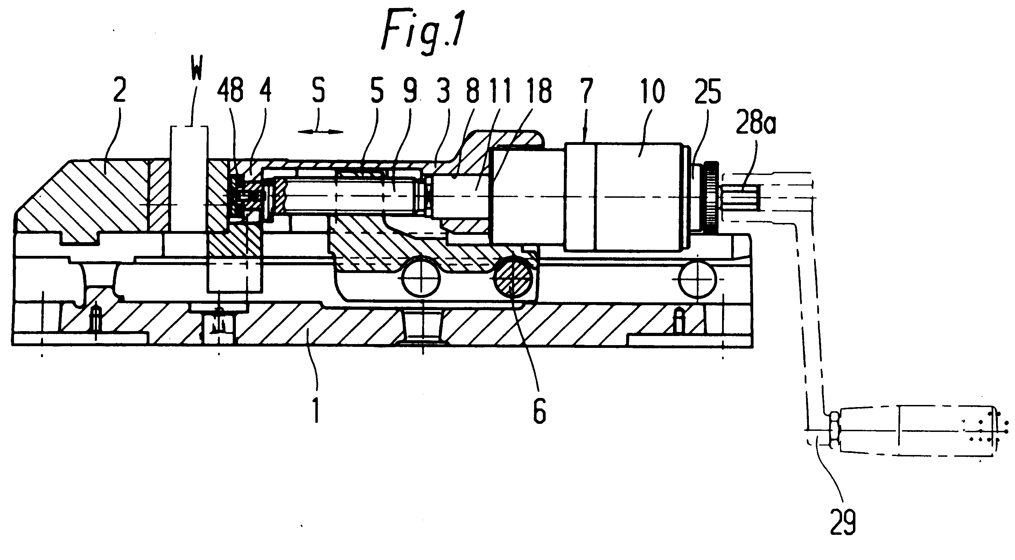

Mittels einer an die Antriebswelle 28 angesetzten Handkurbel 29 kann die Antriebswelle gedreht werden. Da zunächst das zweite Spannglied 14 mittels der Rastkupplung 38 mit dem Gehäuse 10 drehfest gekuppelt ist, ist das Planetengetriebe 30 blockiert. Bei Drehung der Antriebswelle 28 wird daher das Gehäuse 10 im Verhältnis 1 : 1 mitgedreht und damit auch die mit dem Ansatz 11 drehfest verbundene Schraubspindel 9. Die Schraubspindel 9 wird in der Mutter 5 verschraubt, wobei sich die Schraubspindel 9 beim Spannen gemäß Figur 1 nach links verschiebt. Hierbei liegt der Druckring 17 an der Ringfläche 18 des Spannschiebers 3 an und schiebt diesen ebenfalls nach links bis seine Spannbacke 4 am Werkstück anliegt. Dank der Rastkupplung 38 wird die bewegliche Spannbacke 4 mit einer vorbestimmten Vorspannkraft an das Werkstück W angedrückt. Damit ist der Zustellhub des Spannschiebers 3 beendet. Bei weiterer Drehung der Handkurbel 29 wird das durch die Rastkupplung 38 übertragbare Drehmoment überschritten und die Rastelemente 39 werden entgegen der Federkraft 41 radial nach außen gedrückt und rasten aus den Rastausnehmungen 42 aus. Es kann sich nunmehr das zweite Spannglied 14 gegenüber dem Gehäuse 10 verdrehen. Hierbei wird das zweite Spannglied 14 über die Teile des Planetengetriebes 30 angetrieben, indem die Antriebswelle 28 über das Sonnenrad 31 die Planetenräder 34 antreibt, die an dem nunmehr ruhenden Hohlrad 32 des Gehäuses abrollen. Hierdurch werden die Lagerzapfen 33 in Umfangsrichtung gedreht und drehen dabei auch das zweite Spannglied 14 gegenüber dem durch das Gehäuse 10 festgehaltenen ersten Spannglied 13. Durch die gegenseitige Verdrehung der beiden Spannglieder 13, 14 werden die Spannbolzen 15 aufgerichtet, d.h. ihre Verschränkung oder ihr spitzer Winkel gegenüber der Gehäuseachse A nimmt ab. Durch dieses Aufrichten der Spannbolzen 15 vergrößert sich der Abstand zwischen den beiden Spanngliedern 13, 14. Da das zweite Spannglied 14 über die Lagerzapfen 33, die Druckscheibe 35, das Axiallager 36, die Widerlagerscheibe 37 und die Stellschraube 25 in axialer Richtung gegenüber dem Gehäuse 10 abgestützt ist und nicht nach rechts ausweichen kann, wird das erste Spannglied 13 im Gehäuse 10 nach links verschoben. Das erste Spannglied 13 drückt über die Druckbolzen 19 auf den Druckring 17 und dieser drückt den Spannschieber mit hohem Druck nach links gegen das Werkstück W. Dies wird als Spannhub bezeichnet. Infolge des Untersetzungsverhältnisses des Planetengetriebes kann die Handkurbel 29 während des Spannhubes um etwa 330° gedreht werden, bis die Achsen der Spannbolzen 15 parallel zur Gehäuseachse A verlaufen. Die Drehung der Handkurbel 29 und damit die Drehung des zweiten Spanngliedes 14 wird jedoch noch weiter fortgesetzt, bis die Achsen der Spannbolzen 15 über ihre parallel zur Gehäuseachse A verlaufenden Totpunktlage hinaus um etwa 3° entgegengesetzt zu ihrer Ausgangsstellung gegenüber der Gehäuseachse A geneigt sind. Durch die Bewegung der Spannbolzen 15 über ihre parallele Lage zur Gehäuseachse A, d.h. über ihre Totpunktlage hinaus, wird eine sichere Verriegelung des Kraftverstärkers und damit der Spannvorrichtung erreicht. Zur Bewegung der Spannbolzen 15 über die Totpunktlage hinaus muß die Handkurbel 29 um etwa 30° weitergedreht werden. Da hierbei die an der Handkurbel aufzuwendende Kraft nicht weiter ansteigt, sondern im Gegenteil etwas abnimmt, kann man hieran leicht erkennen, daß die Spannvorrichtung nunmehr ihre endgültige verriegelte Spannstellung erreicht hat.

Das Entspannen der Spannvorrichtung erfolgt durch Rückwärtsdrehung der Handkurbel 29. Hierbei wird über das Planetengetriebe 30 zunächst das zweite Spannglied 14 in entgegengesetzter Richtung gegenüber dem ersten Spannglied 13 verdreht, bis die Spannbolzen 14 wieder ihre gegenüber der Gehäuseachse A verschränkte Stellung eingenommen haben und die Rastelemente 39 der Rastkupplung 38 in ihre Rastvertiefungen 42 eingeschnappt sind. Bevor die Rastelemente 39 wieder in ihre Rastvertiefungen 42 einschnappen, liegen sie am Umfang des zweiten Spanngliedes 14 an und werden durch die Federn 41 gegen den Umfang gedrückt, wodurch zwischen diesen und den Rastelementen 39 Gleitreibung entsteht. Hierdurch wird bei der anfänglichen Rückwärtsdrehung der Handkurbel das zweite Spannglied 14 gebremst und ein Zurückschnellen der Handkurbel 29 verhindert, falls man diese nicht richtig festhält oder losläßt. Während der Verdrehung des zeiten Spanngliedes 14 gegenüber dem ersten Spannglied 13 sorgt die Druckfeder 22 dafür, daß das erste Spannglied 13 nach rechts verschoben und die Kugeln 16 in ständiger Anlage an den Spannbolzen 15 gehalten werden. Wenn die Rastkupplung 38 wieder eingerastet ist, ist das Planetengetriebe 30 wieder blockiert und das Gehäuse 10 sowie die Schraubspindel 9 werden mittels der Handkurbel 29 wieder im Verhältnis 1 : 1 gedreht. Die Schraubspindel 9 bewegt sich jetzt von links nach rechts. Durch die am linken Ende der Schraubspindel 9 vorgesehene Beilagscheibe 48 wird nunmehr der Spannschieber 3 mitgenommen und nach rechts bewegt.

## Patentansprüche

1. Spannvorrichtung mit mechanischem Kraftverstärker,
mit einer Gewindespindel (9), die insbesondere auf einen beweglichen Spannschieber (3) eines Maschinenschraubstockes oder dgl. einwirkt und in einer stationären Mutter (5) desselben verschraubbar ist,
mit einem den Kraftverstärker umschließenden, koaxial zur Gewindespindel (9) angeordneten und mit dieser drehfest verbundenen, im wesentlichen zylindrischen Gehäuse (10),
mit einem in dem Gehäuse (10) axial verschiebbaren und drehfest mit diesem verbundenen, ersten Spannglied (13), dessen eines Ende auf ein am Spannschieber (3) anliegendes Druckelement (17) einwirk,
mit einem in dem Gehäuse (10) begrenzt drehbar angeordneten zweiten Spannglied (14),
mit mehreren zwischen den Spanngliedern (13, 14) angeordneten Spannbolzen (15), die in einer Endlage (Entspannstellung) des zweiten Spanngliedes (14) in spitzem Winkel zu einer durch die Gehäuseachse verlaufenden Ebene geneigt und in der anderen Endlage (Spannstellung) des zweiten Spanngliedes (14) annähernd parallel zu dieser Ebene angeordnet sind,
mit einer beide Spannglieder (13, 14) aufeinander zu bewegenden Federanordnung (22),
mit einem das zweite Spannglied (14) gegenüber dem Gehäuse (10) axial abstützenden Axiallager (36) und
mit einer auf das zweite Spannglied einwirkenden, koaxial zum Gehäuse angeordneten Antriebswelle,
**dadurch gekennzeichnet,** daß zwischen dem zweiten Spannglied (14) und der Antriebswelle (28) ein Planetengetriebe (30) vorgesehen ist, dessen Sonnenrad (31) an der Antriebswelle (28) angeordnet, dessen Hohlrad (32) mit dem Gehäuse (10) verbunden und dessen Steg durch das zweite Spannglied (14) gebildet ist, wobei Lagerzapfen (33) der Planetenräder (34) in die den Spannbolzen (15) abgekehrte Rückseite des zweiten Spanngliedes (14) eingreifen, und daß zwischen dem Gehäuse (10) und dem zweiten Spannglied (14) eine federbelastete Rastkupplung (38) vorgesehen ist

2. Spannvorrichtung nach Anspruch 1, **dadurch gekennzeichnet,** daß die Lagerzapfen (33) an den dem zweiten Spannglied (14) abgewandten Seiten der Planetenräder (34) vorstehen und sich mittelbar oder unmittelbar an dem Axiallager (36) abstützen.

3. Spannvorrichtung nach Anspruch 2, **dadurch gekennzeichnet,** daß sich die Lagerzapfen (33) an einer zwischen ihnen und dem Axiallager (36) angeordneten Druckscheibe (36a) abstützen.

4. Spannvorrichtung nach einem der Ansprüche 1 - 3, **dadurch gekennzeichnet,** daß die Rastkupplung (38) mehrere in Umfangsrichtung des Gehäuses (10) versetzt zueinander angeordnete Rastelemente (39) aufweist, die in radial verlaufenden Ausnehmungen (40) des Gehäuses (10) radial beweglich sind, durch Federkraft (41) radial nach innen belastet sind und mit ihren inneren Enden (39a) in entsprechende Rastvertiefungen (42) des zweiten Spanngliedes eingreifen.

5. Spannvorrichtung nach Anspruch 4, **dadurch gekenzeichnet,** daß die inneren Enden (39a) der Rastelemente (39) prismaförmig sind und in prismaförmige Nuten (42) des zweiten Spanngliedes (14) eingreifen.

6. Spannvorrichtung nach einem der Ansprüche 1 - 5, **dadurch gekennzeichnet,** daß das Druckelement ein am vorderen Ende (10a) des Gehäuses (10) angeordneter Druckring (17) ist und daß zwischen diesem und dem ersten Spannglied (13) mehrere Druckbolzen (19) angeordnet sind, die in axialen Bohrungen (20) des Gehäuses (10) verschiebbar sind.

7. Spannvorrichtung nach Anspruch 6, **dadurch gekennzeichnet,** daß der Druckring (17) an einer Ringfläche (18) des Spannschiebers (3) anliegt, die im Bereich des hinteren, dem Spannbacken (4) abgewandten Ende desselben angeordnet ist.

8. Spannvorrichtung nach einem der Ansprüche 1 - 7, **dadurch gekennzeichnet,** daß das Gehäuse (10) an seinem der Schraubspindel (9) zugekehrten vorderen Ende (10a) einen koaxialen zylindrischen, hohlen Ansatz (11) mit einem gegenüber dem Gehäusedurchmesser kleineren Durchmesser aufweist, daß in diesen Ansatz (11) das Ende (9a) der Schraubspindel (9) eingeschraubt ist und daß in dem Ansatz (11) eine Druckfeder (22) angeordnet ist, die auf das erste Spannglied (13) drückt.

9. Spannvorrichtung nach Anspruch 8, **dadurch gekennzeichnet,** daß sich die Druckfeder (22) an dem Ende (9a) der Schraubspindel (9) abstützt.

10. Spannvorrichtung nach einem der Ansprüche 1 - 9, **dadurch gekennzeichnet,** daß der Druckring (17) durch O-Ringe (43, 44) gegenüber dem Gehäuse (10) und dem Ansatz (11) abgedichtet ist.

## Claims

1. A clamping device with a mechanical force amplifier,
with a threaded spindle (9) which acts in particular on a movable clamping slide (3) of a machine vice or the like and can be screwed into a stationary nut (5) thereof,
a substantially cylindrical housing (10) enclosing the force amplifier and arranged coaxial with the threaded spindle (9) and connected rotationally fast therewith,
a first clamping member (13) axially slidable in the housing (10) and connected rotationally fast therewith, whose one end acts on a thrust element (17) bearing on the clamping slide (3),
a second clamping member (14) arranged to rotate within limits in the housing (10),
a plurality of tightening pins (15) arranged between the clamping members (13, 14), which pins are inclined at an acute angle to a plane running through the axis of the housing in one limit position (relaxed position) of the second clamping member (14) and are approximately parallel to this plane in the other limit position (clamping position),
a spring arrangement (22) for moving the two clamping members (13, 14) towards one another, a thrust bearing (36) supporting the second clamping member (14) axially relative to the housing (10) and
a drive shaft acting on the second clamping member and arranged coaxial with the housing,
characterized in that a planetary gear (30) is arranged between the second clamping member (14) and the drive shaft (28), with its sun wheel (31) arranged on the drive shaft (28), its annulus (32) attached to the housing (10) and its carrier formed by the second clamping member (14), wherein bearing pins (33) for the planet wheels (34) engage in the rear side of the second clamping member (14) facing away from the tightening pins (15), and in that a spring-loaded detent coupling (38) is provided between the housing (10) and the second clamping member (14).

2. A clamping device according to claim 1, characterized in that the bearing pins (33) project on the sides of the planet wheels (34) remote from the second clamping member (14) and bear directly or indirectly on the thrust bearing (36).

3. A clamping device according to claim 2, characterized in that the bearing pins (33) bear on a thrust washer (36a) arranged between them and the thrust (36).

4. A clamping device according to any of claims 1 to 3, characterized in that the detent coupling (38) has a plurality of detent elements (39) offset from one another in the circumferential direction of the housing (10) and which are radially movable in radially extending recesses (40) of the housing (10), are biased radially inwards by spring force (41) and engage with their inner ends (39a) in corresponding detent depressions (42) in the second clamping member.

5. A clamping device according to claim 4, characterized in that the inner ends (39a) of the detent elements (39) are of prismatic shape and engage in prismatic grooves (42) in the second clamping member (14).

6. A clamping device according to any of claims 1 to 5, characterized in that the thrust element is a thrust ring (17) arranged at the front end (10a) of the housing (10) and in that a plurality of thrust pins (19) are arranged between this ring and the first clamping member (13) and can slide in axial bores (20) in the housing (10).

7. A clamping device according to claim 6, characterized in that the thrust ring (17) bears on an annular surface (18) of the clamping slide (3), which is disposed in the region of the rear end thereof, remote from the clamping jaw (4).

8. A clamping device according to any of claims 1 to 7, characterized in that the housing (10) has a coaxial, cylindrical, hollow extension (11) on its front end (10a) facing the screw spindle (9), with a smaller diameter than the housing diameter, in that the end (9a) of the screw spindle (9) is screwed into this extension (11) and in that a compression spring (22) is arranged in the extension (11) and bears on the first clamping member (13).

9. A clamping device according to claim 8, characterized in that the compression spring (22) bears on the end (9a) of the screw spindle (9).

10. A clamping device according to any of claims 1 to 9, characterized in that the thrust ring (17) is sealed relative to the housing (10) and the extension (11) by D-rings (43, 44).

## Revendications

1. Dispositif de serrage à amplificateur de force mécanique, comprenant
une broche filetée (9), qui agit notamment sur un coulisseau de serrage (3) mobile d'un étau de machine ou analogue et peut être vissée dans un écrou fixe (5) de ce dernier,
un boîter (10) essentiellement cylindrique, entourant l'amplificateur de force, disposé coaxialement à la broche filetée (9) et lié en rotation à cette dernière,
un premier organe de serrage (13), axialement coulissant dans le boîtier (10) et lié en rotation à ce dernier, organe dont une première extrémité agit sur un élément de pression (17) s'appliquant contre le coulisseau de serrage (3),
un deuxième organe de serrage (14), disposé à rotation limitée dans le boîtier (10),
plusieurs goupilles de serrage (15) disposées entre les organes de serrage (13, 14), goupilles qui sont disposées, dans une position finale (position de desserrage) du deuxième organe de serrage (14), en étant inclinées sous un angle aigu par rapport à un plan passant par l'axe du boîtier et, dans l'autre position finale (position de serrage) du deuxième organe de serrage (14), en étant approximativement parallèles à ce plan,
un ensemble de ressort (22) déplaçant les deux organes de serrage (13, 14) l'un vers l'autre,
un palier de butée (36) soutenant axialement le deuxième organe de serrage (14) vis-à-vis du boîtier (10),
et un arbre d'entraînement agissant sur le deuxième organe de serrage et disposé coaxialement au boîtier,
**caractérisé** en ce qu'un engrenage planétaire (30) est prévu entre le deuxième organe de serrage (14) et l'arbre d'entraînement (28), engrenage dont le planétaire (31) est disposé sur l'arbre d'entraînement (28), dont la couronne (32) est assemblée au boîtier (10) et dont la portée est formée par le deuxième organe de serrage (14), des tourillons (33) des satellites (34) s'engageant dans le côté arrière, opposé aux goupilles de serrage (15), du deuxième organe de serrage (14), et en ce qu'un accouplement de crantage (38) sollicité par ressort est prévu entre le boîtier (10) et le deuxième organe de serrage (14).

2. Dispositif de serrage selon la revendication 1, **caractérisé** en ce que les tourillons (33) dépassent sur les côtés des satellites (34) qui sont opposés au deuxième organe de serrage (14) et s'appuient indirectement ou directement contre le palier de butée (36).

3. Dispositif de serrage selon la revendication 2, **caractérisé** en ce que les tourillons (33) s'appuient contre un disque de pression (36a) disposé entre eux et le palier de butée (36).

4. Dispositif de serrage selon une des revendications 1 à 3, **caractérisé** en ce que l'accouplement de crantage (38) présente plusieurs éléments de crantage (39) disposés en décalage mutuel dans la direction circonférentielle du boîtier (10), qui sont mobiles radialement dans des évidements (40) du boîtier (10) s'étendant radialement, sont sollicités radialement vers l'intérieur par force de ressort (41) et s'engagent par leurs extrémités intérieures (39a) dans des renfoncements de crantage (42) correspondants du deuxième organe de serrage.

5. Dispositif de serrage selon la revendication 4, **caractérisé** en ce que les extrémités intérieures (39a) des éléments de crantage (39) sont de forme prismatique et s'engagent dans des rainures prismatiques (42) du deuxième organe de serrage (14).

6. Dispositif de serrage selon une des revendications 1 à 5, **caractérisé** en ce que l'élément de pression est une bague de pression (17) disposée à l'extrémité avant (10a) du boîtier (10), et en ce que plusieurs goujons de pression (19) sont disposés entre cette bague et le premier organe de serrage (13), qui sont coulissants dans des perçages axiaux (20) du boîtier (10).

7. Dispositif de serrage selon la revendication 6, **caractérisé** en ce que la bague de pression (17) s'applique contre une face annulaire (18) du coulisseau de serrage (3), qui est disposée dans la région de l'extrémité arrière de ce dernier, opposée au mors (4).

8. Dispositif de serrage selon une des revendications 1 à 7, **caractérisé** en ce que le boîtier (10) présente, à son extrémité avant (10a) tournée vers la broche filetée (9), un appendice (11) creux, coaxial et cylindrique, de diamètre inférieur au diamètre du boîtier, en ce que l'extrémité (9a) de la broche filetée (9) est vissée dans cet appendice (11), et en ce qu'un ressort de pression (22) est disposé dans l'appendice (11), ressort qui exerce une pression sur le premier organe de serrage (13).

9. Dispositif de serrage selon la revendication 8, **caractérisé** en ce que le ressort de pression (22) s'appuie contre l'extrémité (9a) de la broche filetée (9).

10. Dispositif de serrage selon une des revendications 1 à 9, **caractérisé** en ce que la bague de pression (17) est étanchée par des joints toriques (43, 44) vis-à-vis du boîtier (10) et de l'appendice (11).
